# EUROPEAN PATENT SPECIFICATION

(11) **EP 2 489 762 B1**
(45) Date of publication and mention of the grant of the patent: **17.12.2014**
(21) Application number: 10846304.3
(22) Date of filing: 09.09.2010
(51) Int. Cl.: C25D 3/22, C08G 73/02, C08L 71/00

(54) **ADDITIVE FOR ZINC PLATING BATHS AND NON-CYANIDE ALKALINE ZINC PLATING BATHS**
ZUSATZSTOFF FÜR ZINKPLATTIERUNGSBÄDER UND CYANIDFREIE ALKALI-ZINKPLATTIERUNGSBÄDER
ADDITIF POUR BAINS DE ZINGAGE ET BAINS DE ZINGAGE ALCALINS SANS CYANURE

(43) Date of publication of application: 22.08.2012
(73) Proprietor: Yuken Industry Co., Ltd., Kariya-shi, Aichi 448-8511 (JP)
(72) Inventor: ITO, Kazuo, Kariya-shi Aichi 448-8511 (JP); TOMOYAMA, Yuri, Kariya-shi Aichi 448-8511 (JP)
(74) Representative: Paget, Hugh Charles Edward
(86) International application number: PCT/JP2010/065567
(87) International publication number: WO 2012/032643

(56) References cited:
- WO-A1-99/50479
- WO-A1-2007/025606
- WO-A1-2010/055825
- WO-A1-2010/055825
- JP-A- 8 209 379
- JP-A- 11 193 488
- JP-A- 2001 214 293
- US-A- 5 873 911
- US-B1- 6 652 728

## Description

### Technical Field

The present invention relates to an alkaline non-cyanide zinc plating bath.

### Background Art

Zinc plating has been used for metal parts in order to prevent them from being corroded by rust. Electroplating is used for zinc plating of metal parts. Electroplating is a method of supplying a current to a metal which is an object of zinc plating (which metal will hereinafter be called "object") while dipping the object in a zinc plating bath. When a current is supplied, zinc dissolved in a zinc plating bath deposits on various positions on the surface of the object. The zinc thus deposited then covers therewith the surface of the object and thus a zinc coating is formed thereon.

In electroplating, variations in the deposition amount of zinc depending on the position on the surface of the object have become a problem. When the deposition amount of zinc differs, depending on the position on the surface of the object, a zinc coating different in thickness is formed on the surface of the object. Due to the variations in the thickness of the zinc coating, the zinc coating is likely to be inferior in bright appearance and the like. In order to reduce the variations in the deposition amount of zinc, an additive serving to suppress deposition of zinc is added to a zinc plating bath (for example, Patent Document 1). Due to the action of this additive, the deposition amounts of zinc are made substantially equal to each other at various positions on the surface of the object, making it possible to form a zinc coating whose thickness does not vary so much among the positions on the surface of the subject.

### Prior Art Documents

### Patent Documents

Patent Document 1:JP-A-51-135837

The above-described additive however suppresses deposition of zinc not only at a position where the deposition amount of zinc becomes excessive but also at a position where the deposition amount of zinc is originally small. This leads to the problem of a reduction in a formation speed of a zinc coating.

With the foregoing in view, an object of the present invention is to provide an alkaline non-cyanide zinc plating bath enabling the rapid formation of a zinc coating having small variations in thickness depending on the position on the surface of an object.
WO 2007/029606 describes a nitrogen polymer additive for electrolytic deposition of zinc and zinc alloys as a reaction product of two amino derivatives with epichlorohydrin, dihalogenalkane or dihalogenelkylether. It also describes a process for producing this additive, and its use.

### Summary of the Invention

The present invention has been completed with a view to satisfying the above-described object. Described herein are zinc plating bath additives and alkaline non-cyanide zinc plating baths. The following are provided by the present invention.
[1] An alkaline non-cyanide zinc plating bath comprising a zinc plating bath additive, zinc ions, and hydroxide ions, the zinc plating bath additive comprising a water soluble copolymer having structural units (a) each represented by the following formula (1) and structural units (b) each represented by the following formula (2): 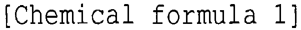 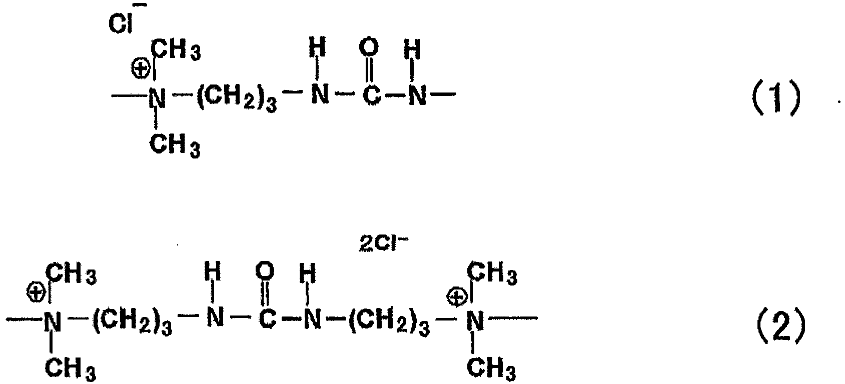 wherein the structural units (a) and the structural units (b) are contained in the water soluble copolymer so that a percentage of the mass of the structural units (a) relative to the sum of the mass of the structural units (a) and the mass of the structural units (b) is from 10 to 60%;
   wherein in the water soluble copolymer, the structural units (a), the structural units (b), or the structural unit (a) and the structural unit (b) have been linked to each other via a linking group represented by the following formula (3) and/or the following formula (4): 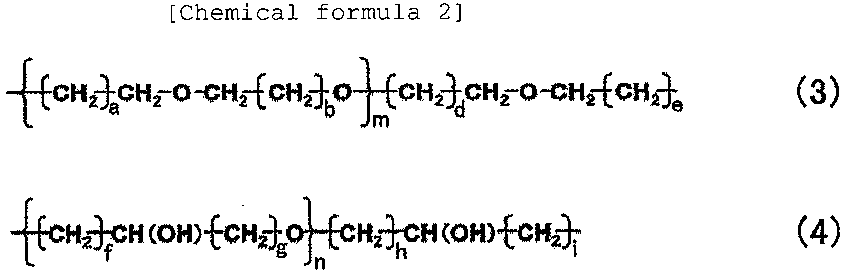 (in the formula (3), a stands for an integer from 1 to 5, b stands for an integer from 1 to 5, d stands for an integer from 1 to 5, e stands for an integer from 1 to 5, and m stands for an integer from 0 to 5, while in the formula (4), f stands for an integer from 1 to 5, g stands for an integer from 1 to 5, h stands for an integer from 1 to 5, i stands for an integer from 1 to 5, and n stands for an integer from 0 to 5).
[2] The alkaline non-cyanide zinc plating bath as described above in [1], wherein the water soluble copolymer is contained in an amount of from 0.1 to 50 g/L.
[3] The alkaline non-cyanide zinc plating bath as described above in [1] or [2], containing N-benzylpyrimidium-3-carbonate.
[4] The alkaline non-cyanide zinc plating bath as described above in any of [1] to [3], containing a bisulfite adduct obtained by adding a bisulfite to the aldehyde group of an aromatic aldehyde compound represented by the following formula (5): 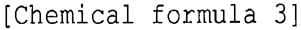 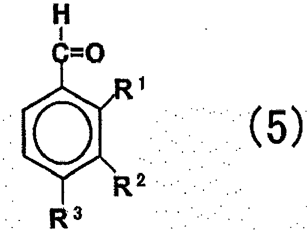 (in the formula (5), R¹, R², R³ each represents -H, - OH, or -OCH₃ and R¹ to R³ may be the same or different).
[5] The alkaline non-cyanide zinc plating bath as described above in [4], wherein the aromatic aldehyde compound is at least one compound selected from the group consisting of 4-methoxybenzaldehyde, 4-hydroxy-3-methoxybenzaldehyde, 3,4-dimethoxybenzaldehyde, 3,4-methylenedioxybenzaldehyde, 2-hydroxybenzaldehyde, and 4-hydroxybenzaldehyde.
[6] The alkaline non-cyanide zinc plating bath as described above in [4] or [5], wherein the bisulfite adduct is contained in an amount of from 0.005 to 1.0 g/L.
[7] The alkaline non-cyanide zinc plating bath as described above in any of [1] to [6], wherein the zinc ions are contained in an amount of from 5 to 25 g/L.
[8] The alkaline non-cyanide zinc plating bath as described above in any of [1] to [7], containing at least one compound selected from the group consisting of silicon compounds, sodium ethylenediaminetetraacetate, and trisodium hydroxyethylenediaminetriacetate.
[9] The alkaline non-cyanide zinc plating bath as described above in any of [1] to [8], containing a heterocyclic compound represented by the following formula (6) and/or a derivative of the heterocyclic compound: 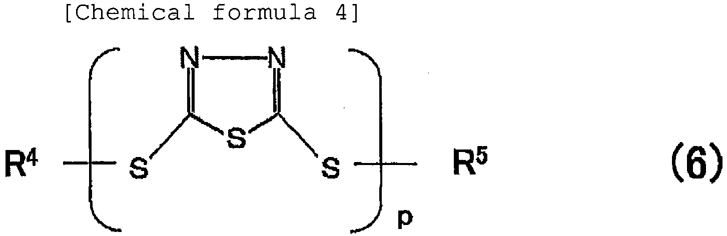 (in the formula (6), p stands for an integer from 1 to 3 and R⁴ and R⁵ may be the same or different and each represents -H, -CH₂COOH, -CH₂CH₂OH, or -CH₂CH(OH)CH₂Cl).

The zinc plating bath additive described herein enables the rapid formation of a zinc coating having small variations in thickness depending on the position on the surface of the object. The alkaline non-cyanide zinc plating bath of the present invention enables the rapid formation of a zinc coating having small variations in thickness depending on the position on the surface of the object.

### Brief Description of the Drawings

Fig. 1 is a schematic view of a cathode sheet after a hull cell plating test.
Fig. 2 is a graph showing the thicknesses, at various positions of a cathode sheet, of each of the zinc coatings of Examples 1 to 4 and Comparative Examples 1 and 2.
FIG. 3 is a graph showing the thicknesses, at various positions of a cathode sheet, of the zinc coating of Comparative Example 3.

### Mode for Carrying out the Invention

Embodiments of the present invention will next be described referring to drawings.

### 1. Zinc plating bath additive:

The zinc plating bath additive described herein contains a water soluble copolymer having structural units (a) represented by the following formula (1) and structural units (b) represented by the following formula (2):

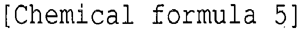

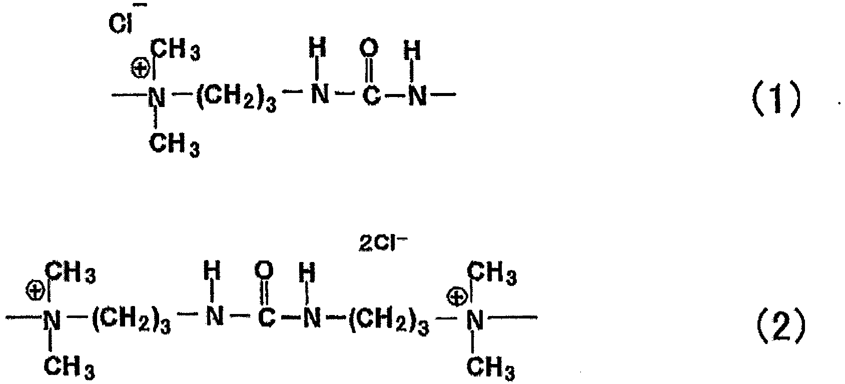

The water soluble copolymer has a weight average molecular weight (Mw) of preferably from 2000 to 50000 from the standpoint of its functional characteristics. The term "functional characteristics" as used herein embraces a characteristic of improving the appearance of a zinc coating (preventing the burnt deposits of the zinc coating and preventing uneven bright appearance), a characteristic of forming a zinc coating rapidly (characteristic of increasing a deposition amount of zinc per hour), and a characteristic of decreasing the variations in coating thickness depending on the position on the surface of the object (characteristic of forming a zinc coating with more uniform thickness). From the standpoint of enhancing the above-described functional characteristics, the water soluble copolymer has a weight average molecular weight of more preferably from 2000 to 30000. The weight average molecular weight can be determined using a calibration curve, that is, a third-order approximation curve, with polyethylene oxide (PEO) as a standard sample.

In addition, the zinc plating bath additive described herein containing a water soluble copolymer having structural units (a) and structural units (b) is effective for suppressing excessive deposition of zinc. Due to this effect, it is possible to suppress an excess amount of zinc from depositing only at limited positions on the surface of the object and as a result, to suppress variations in the thickness of the zinc coating depending on the position on the surface of the object.

Electroplating may cause variations in current density on the surface of the object depending on the positions. When they occur, the deposition amount of zinc per hour increases at a high current density position on the surface of the object, while the deposition amount of zinc per hour decreases at a low current density position on the surface of the object. Variations in the current density on the surface of the object depending on the position lead to variations in the thickness of the zinc coating depending on the position on the surface of the object.

The zinc plating bath additive described herein containing a water soluble copolymer having structural units (a) and structural units (b) can strongly suppress the deposition of zinc at a high current density position. On the other hand, the zinc plating bath additive described herein containing a water soluble copolymer having structural units (a) and structural units (b) has a weak effect on suppressing deposition of zinc at a low current density position. Even addition of the zinc plating bath additive described herein to a zinc plating bath does not easily cause a decrease in the deposition amount of zinc per hour at a low current density position. Addition of the zinc plating bath additive described herein to a zinc plating bath can therefore decrease the deposition amount of zinc at a high current density position, while keeping the deposition amount of zinc at a low current density position. The deposition amount of zinc at a high current density position approaches the deposition amount of zinc at a low current density position, resulting in small variations in the thickness of the zinc coating depending on the position on the surface of the object. In addition, the addition does not excessively suppress deposition of zinc at a low current density position, so that a zinc coating can be formed rapidly.

The zinc plating bath additive described herein tends to increase the deposition amount of zinc per hour with an increase in the percentage of the mass of the structural units (a) contained in the water soluble copolymer relative to the sum of the mass of the structural units (a) and the mass of the structural units (b) contained in the water soluble copolymer (which percentage will hereinafter be called "structural units (a)•(b) percentage"). Accordingly, the deposition amount of zinc per hour can be increased or decreased by adjusting the structural units (a)•(b) percentage in the water soluble copolymer, without changing the zinc concentration of the bath or changing the temperature of the bath. This means that the formation speed of a zinc coating can be adjusted by adding the zinc plating bath additive described herein to a zinc plating bath, without changing the zinc ion concentration in the bath or changing the temperature of the bath. As a result, there does not occur a problem, that is, an excessive increase in the thickness of a zinc coating at some positions on the surface of the object, which will otherwise occur when the zinc concentration in the bath is increased or the bath temperature is raised. In short, addition of the zinc plating bath additive described herein to a zinc plating bath makes it possible to overcome the problem which has occurred in the conventional process upon adjusting the formation speed of a zinc coating.

In the zinc plating bath additive described herein, the structural units (a)•(b) percentage in the water soluble copolymer is preferably from 10 to 60%. When the structural units (a)•(b) percentage is from 10 to 60%, the formation speed of a zinc coating can be adjusted by increasing or decreasing the structural units (a)•(b) percentage in any mode of electroplating (barrel plating, zinc plating while suspending an object from a jig, or the like).

In addition, when the structural units (a)•(b) percentage in the water soluble copolymer is from 10 to 60%, a difference in the deposition amount of zinc per hour is likely to decrease between a high current density position and a low current density position with a decrease in the structural units (a)•(b) percentage. In order to form a zinc coating with more even thickness, it is therefore recommended to incorporate a water soluble copolymer having a small structural units (a)•(b) percentage in the zinc plating bath additive.

The zinc plating bath additive described herein can exhibit the above-described effect even when the structural units (a), the structural units (b), or the structural unit (a) and the structural unit (b) of the water soluble copolymer are linked to each other via a linking group represented by the following formula (3) and/or the following formula (4): 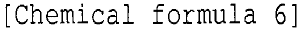 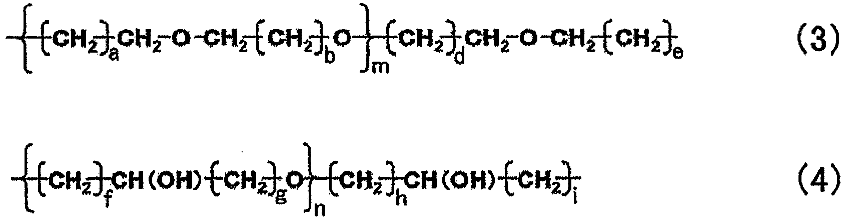 (in the formula (3), a stands for an integer from 1 to 5, b stands for an integer from 1 to 5, d stands for an integer from 1 to 5, e stands for an integer from 1 to 5, and m stands for an integer from 0 to 5, while in the formula (4), f stands for an integer from 1 to 5, g stands for an integer from 1 to 5, h stands for an integer from 1 to 5, i stands for an integer from 1 to 5, and n stands for an integer from 0 to 5).

The linking group represented by the formula (3) is bis(2-chloromethyl)ether, bis(2-chloroethyl)ether, or bis(2-chloropropyl)ether and it can be inserted in the water soluble copolymer by the linking in the form of a self polymerization product thereof in an aqueous solution reaction. The linking group represented by the formula (4) is epichlorohydrin, 1,3-dichloro-2-propanol, or 1,4-dichloro-2-butanol and it can be inserted in the water soluble polymer by the linking in the form of a self polymerization product thereof in an aqueous solution reaction. For example, an urea derivative having the structural units (a) and an urea derivative having the structural units (b) are mixed and dissolved in a water used as a solvent at a desired molar ratio and then, a necessary amount of epichlorohydrin is added in small portions under stirring while keeping the liquid temperature at 60°C or less. The reaction mixture is then refluxed for 2 hours to cause polycondensation. In such a manner, a water soluble polymer having the structural units (a), the structural units (b), or the structural unit (a) and the structural unit (b) linked via the linking group represented by the formula (4) can be prepared.

Examples of the zinc plating bath using the zinc plating bath additive described herein include an alkaline non-cyanide zinc plating bath which will be described below (which bath will hereinafter be called "the alkaline non-cyanide zinc plating bath of the present invention").

### 2. Alkaline non-cyanide zinc plating bath:

The alkaline non-cyanide zinc plating bath of the present invention contains the zinc plating bath additive containing a water soluble copolymer having the structural units (a) and the structural units (b), zinc ions, and hydroxide ions. The term "water soluble copolymer" as used hereinafter means a water soluble copolymer having the structural units (a) and the structural units (b) unless otherwise specifically referred to. The term "zinc plating bath additive" as used hereinafter means a zinc plating bath additive (the above-described zinc plating bath additive) containing a water soluble copolymer having the structural units (a) and the structural units (b) unless otherwise specifically referred to.

Electroplating using the alkaline non-cyanide zinc plating bath of the present invention enables the rapid formation of a zinc coating. The resulting zinc coating has small variations in the thickness depending on the position on the surface of the object. Even when the intensity of the current density on the surface of the object varies upon electroplating, a zinc coating with small variations in thickness can be formed.

Further, in the alkaline non-cyanide zinc plating bath of the present invention, the higher the structural units (a)•(b) percentage in the water soluble copolymer, the greater the deposition amount of zinc per hour. When more rapid formation of a zinc coating is required upon using the alkaline non-cyanide zinc plating bath of the present invention, it is only necessary to increase the structural units (a)•(b) percentage in the water soluble copolymer. This means that the formation speed of a zinc coating can be changed easily only by preparing a bath again while replacing only the water soluble copolymer with another one. In addition, in the alkaline non-cyanide zinc plating bath of the present invention, a formation speed of a zinc coating can be adjusted without changing the zinc ion concentration of the bath or the temperature of the bath. This results in resolution of the problem such as excessive thickening of a zinc coating at limited positions on the surface of the object which will otherwise occur when the zinc concentration in the bath or the bath temperature is increased. This means that the alkaline non-cyanide zinc plating bath of the present invention can solve the problem of the conventional process which has occurred at the time of adjusting the formation speed of a zinc coating.

In the alkaline non-cyanide zinc plating bath of the present invention, the deposition amount of zinc per hour at a high current density position decreases with a decrease in the structural units (a)•(b) percentage of the water soluble copolymer. As a result, the deposition amount of zinc at a high current density position approaches the deposition amount of zinc at a low current density position. It is therefore possible to make the deposition amount of zinc at a high current density position and the deposition amount of zinc at a low current density position substantially equal to each other and thereby form a zinc coating with more uniform thickness by adjusting the structural units (a)•(b) percentage of the water soluble copolymer.

The alkaline non-cyanide zinc plating bath of the present invention contains the water soluble copolymer having the structural units (a) and the structural units (b) in an amount of preferably from 0.1 to 50 g/L. When from 0.1 to 50 g/L of the water soluble copolymer is contained in the alkaline non-cyanide zinc plating bath of the present invention, an increase or decrease of the structural units (a)•(b) percentage as described above is likely to be reflected in an increase or decrease of the deposition amount of zinc per hour.

The alkaline non-cyanide zinc plating bath of the present invention contains preferably N-benzylpyrimidium-3-carbonate from the standpoint of making the zinc coating brighter (enhancing the so-called brightness) or from the standpoint of improving the adherence of zinc deposited at a low current density position to the object (enhancing a throwing power).

From the standpoint of enhancing brightness or enhancing throwing power, the alkaline non-cyanide zinc plating bath of the present invention contains preferably a bisulfite adduct obtained by adding a bisulfite to the aldehyde group of an aromatic aldehyde compound represented by the following formula (5): 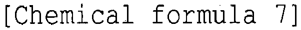 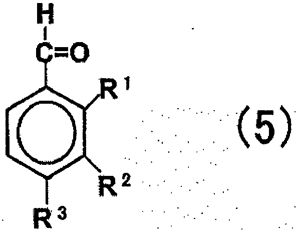 (in the above formula (5), R¹, R², and R³ each represents -H, -OH, or -OCH₃ and R¹ to R³ may be the same or different).

As the aromatic aldehyde compound, at least one compound selected from the group consisting of 4-methoxybenzaldehyde, 4-hydroxy-3-methoxybenzaldehyde, 3,4-dimethoxybenzaldehyde, 3,4-methylenedioxybenzaldehyde, 2-hydroxybenzaldehyde, and 4-hydroxybenzaldehyde can be used.

The alkaline non-cyanide zinc plating bath of the present invention preferably contains the bisulfite adduct in an amount of from 0.005 to 1.0 g/L.

The alkaline non-cyanide zinc plating bath of the present invention preferably contains zinc ions in an amount of from 5 to 25 g/L.

The alkaline non-cyanide zinc plating bath of the present invention can also be used for a zincate zinc plating bath containing zincate zinc ([Zn(OH)₄]²⁻). For the preparation of zincate zinc, a method ordinarily employed by those skilled in the plating technology can be adopted as needed. For example, in order to obtain a plating bath having zincate zinc dissolved therein, zincate zinc may be prepared in a similar manner to the conventionally known one by dissolving zinc oxide (ZnO) in an aqueous alkaline (NaOH) solution such as aqueous solution of sodium hydroxide (NaOH).

The alkaline non-cyanide zinc plating bath of the present invention preferably contains at least one compound selected from the group consisting of silicon compounds, sodium ethylenediaminetetraacetate, and trisodium hydroxyethylenediaminetriacetate for the purpose of rendering harmful metal ions, if any, harmless or for the purpose of softening water.

The alkaline non-cyanide zinc plating bath of the present invention preferably contains a heterocyclic compound represented by the below-described formula (6) and/or a derivative of the heterocyclic compound from the standpoint of increasing the deposition amount of zinc per hour. In particular, inclusion of the heterocyclic compound or the derivative of the heterocyclic compound increases the deposition amount of zinc per hour at a low current density position and thereby decreases a difference in the deposition amount of zinc per hour between the high current density position and the low current density position. This means that a zinc coating with a uniform thickness can be formed more rapidly by incorporating the heterocyclic compound or its derivative therein. 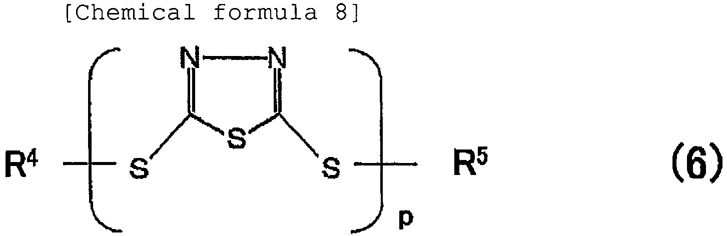 (in the formula (6), p stands for an integer from 1 to 3 and R⁴ and R⁵ may be the same or different and each represents -H, -CH₂COOH, -CH₂CH₂OH, or -CH₂CH(OH)CH₂Cl).

### Examples

The present invention will next be described more specifically based on Examples. It should however be noted that the present invention is not limited to or by these examples.

### (1) Zinc plating bath additive

### (Additive A)

A 300-ml three-necked flask was charged with 19.3 g (0.084 mol) of N,N'-bis[3-(dimethylamino)propyl]urea, 12.2 g (0.084 mol) of [3-(dimethylamino)propyl]urea, 3.3 g (0.084 mol) of sodium hydroxide, and 62.4 g of water, and then 15.4 g (0.17 mol) of epichlorohydrin was added in small portions at 60°C or less under stirring. The reaction mixture was then heated under reflux for 2 hours to cause a polycondensation reaction. The polycondensate thus obtained was used as Additive A.

### (Additive B)

A 300-ml three-necked flask was charged with 25.7 g (0.112 mol) of N,N'-bis[3-(dimethylamino)propyl]urea, 8.1 g (0.056 mol) of [3-(dimethylamino)propyl]urea, 2.2 g (0.056 mol) of sodium hydroxide, and 62.4 g of water, and then 15.4 g (0.17 mol) of epichlorohydrin was added in small portions at 60°C or less under stirring. The reaction mixture was then heated under reflux for 2 hours to cause a polycondensation reaction. The polycondensate thus obtained was used as Additive B.

### (Additive C)

A 300-ml three-necked flask was charged with 30.9 g (0.134 mol) of N,N'-bis[3-(dimethylamino)propyl]urea, 4.9 g (0.034 mol) of [3-(dimethylamino)propyl]urea, 1.3 g (0.034 mol) of sodium hydroxide, and 62.4 g of water, and then 15.4 g (0.17 mol) of epichlorohydrin was added in small portions at 60°C or less under stirring. The reaction mixture was then heated under reflux for 2 hours to cause a polycondensation reaction. The polycondensate thus obtained was used as Additive C.

### (Additive D)

A 300-ml three-necked flask was charged with 38.6 g (0.168 mol) of N,N'-bis[3-(dimethylamino)propyl]urea and 62.4 g of water, and then 15.4 g (0.17 mol) of epichlorohydrin was added in small portions at 60°C or less under stirring. The reaction mixture was then heated under reflux for 2 hours to cause a polycondensation reaction. The polycondensate thus obtained was used as Additive D.

### (Additive E)

A polycondensate (trade name Product, Product No. J-138M) available by charging dimethylaminopropylamine and epichlorohydrin at a molar ratio of 1:1 to cause a polycondensation reaction was obtained from URSA and used as Additive E.

The molecular weight of Additives A to E was measured based on a calibration curve, which was a third-order approximation curve with polyethylene oxide (PEO) as a standard sample, by using as a high-performance GPC apparatus HLC-8320GPC and Eco SEC (product of TOSOH) (GPC measurement conditions will be described later). As a result, it has been found that Additive A has Mw of 3900, Additive B has Mw of 4600, Additive C has Mw of 5700, Additive D has Mw of 7200, and Additive E has Mw of 16000. GPC is a method of separating a target substance on the basis of molecular size. The GPC apparatus is an apparatus for separating a substance by using a chromatograph equipped with a column capable of sorting it based on the molecular size. GPC is excellent in separating/analyzing particularly a high molecular substance. Aqueous GPC is a kind of size exclusion chromatography and is abbreviated as SEC.

### <Conditions common to GPC measurement>

Aqueous GPC apparatus: HLC-8320GPC EcoSEC (product of TOSOH Techno System)
Column: TSKgel G6000PWXL-CP + TSKgel G3000PWXL-CP (7.8 mm I.D. x 30 cm)
Detector: differential refractometer (RI detector)
Eluent: 0.1M NaNO₃ aqueous solution
Column temperature: 40°C

The mass ratio of the structural units (a) and (b) of the polymer contained in Additives A to D was determined using ¹³C-NMR (DMSO-d6, 400MHz). The mass of the structural units (a) was calculated based on the intensity ratio of their carbonyl carbon peak at about 162 ppm and that of the structural units (b) was calculated based on the intensity ratio of their carbonyl carbon peak at about 159 ppm.

A percentage of the structural units (a)•(b) [mass of the structural units (a)/(mass of the structural units (a) + mass of the structural units (b) x 100) of the polymer contained in Additives A to D are shown in Table 1.

**[Table 1]**

| | Percentage (%) of structural units (a)•(b) |
|---|---|
| Additive A | 50 |
| Additive B | 33 |
| Additive C | 20 |
| Additive D | 0 |

### (2) Preparation of alkaline non-cyanide zinc plating bath

### (Example 1)

An alkaline non-cyanide zinc plating bath containing 12 g/L of zinc ions, 120 g/L of sodium hydroxide, 2.50 g/L of Additive A, and 0.05 g/L of a 48% aqueous solution of benzyl pyridinium carboxylate ["Lugalvan BPC-48", product of BASF, which will hereinafter be called "brightener (I)"] was prepared (Table 2).

### (Example 2)

An alkaline non-cyanide zinc plating bath containing 12 g/L of zinc ions, 120 g/L of sodium hydroxide, 2.50 g/L of Additive B, and 0.05 g/L of the brightener (I) was prepared (Table 2).

### (Example 3)

An alkaline non-cyanide zinc plating bath containing 12 g/L of zinc ions, 120 g/L of sodium hydroxide, 2.50 g/L of Additive C, and 0.05 g/L of the brightener (I) was prepared (Table 2).

### (Example 4)

An alkaline non-cyanide zinc plating bath containing 12 g/L of zinc ions, 120 g/L of sodium hydroxide, 2.50 g/L of Additive B, and as a brightener, 0.03 g/L of an aqueous solution of a Na bisulfite adduct of anisaldehyde (a content of the Na bisulfite adduct of anisaldehyde was 40 g/L in terms of anisaldehyde) [which will hereinafter be called "brightener (II)"] was prepared (Table 2).

### (Comparative Example 1)

An alkaline non-cyanide zinc plating bath containing 12 g/L of zinc ions, 120 g/L of sodium hydroxide, 2.50 g/L of Additive D, and 0.05 g/L of the brightener (I) was prepared (Table 2).

### (Comparative Example 2)

An alkaline non-cyanide zinc plating bath containing 12 g/L of zinc ions, 120 g/L of sodium hydroxide, 1.60 g/L of Additive E, and as a brightener, 0.05 g/L of the brightener (I) was prepared (Table 2).

### (Comparative Example 3)

An alkaline non-cyanide zinc plating bath containing 12 g/L of zinc ions and 120 g/L of sodium hydroxide was prepared (Table 2).

**[Table 2]**

| | Composition of plating bath | | | | | | Brightness | Burnt deposit at high current area | Bend test at high current area | Average coating thickness (µm) | Evaluation of uniform electrodeposition | | |
|---|---|---|---|---|---|---|---|---|---|---|---|---|---|
| | Zn (g/L) | NaOH (g/L) | Additive | | Brightener | | | | | | HCD coating thickness (µm) | LCD coating thickness (µm) | Uniform electrodeposition |
| | | | Kind | (g/L) | Kind | (g/L) | | | | | | | |
| Example 1 | 12 | 120 | Additive A | 2.50 | Brightener (I) | 0.05 | Entire brightness | None | No peeling | 4.91 | 6.28 | 3.45 | 1.82 |
| Example 2 | 12 | 120 | Additive B | 2.50 | Brightener (I) | 0.05 | Entire brightness | None | No peeling | 3.91 | 4.48 | 3.22 | 1.39 |
| Example 3 | 12 | 120 | Additive C | 2.50 | Brightener (I) | 0.05 | Entire brightness | None | No peeling | 3.06 | 3.25 | 2.78 | 1.17 |
| Example 4 | 12 | 120 | Additive B | 2.50 | Brightener (II) | 0.03 | Entire brightness | None | No peeling | 4.23 | 4.97 | 3.19 | 1.56 |
| Comp. Ex. 1 | 12 | 120 | Additive D | 2.50 | Brightener (I) | 0.05 | Entire brightness | None | No peeling | 1.00 | 1.05 | 1.03 | 1.02 |
| Comp. Ex. 2 | 12 | 120 | Additive E | 1.60 | Brightener (I) | 0.05 | Semi-brightness | Observed | Peeling observed | 4.92 | 8.20 | 2.04 | 4.02 |
| Comp. Ex. 3 | 12 | 120 | Free | - | Free | - | Coarse crystals | Observed | Peeling observed | 7.44 | 8.67 | 2.70 | 3.21 |

### (3) Hull cell plating test

In a plating tank (a 267-ml hull cell tank, product of YAMAMOTO MS Co., Ltd., Product No: B-50 plain type tank) containing any one of alkaline non-cyanide zinc plating baths obtained in Examples 1 to 4 and Comparative Examples 1 to 3, an iron sheet (45 mm long x 45 mm wide x 1 mm thick) was placed as an anode sheet and a cold rolled steel sheet (SPCC) (65 mm long x 100 mm wide x 1.5 mm thick) was placed as a cathode sheet. Plating was performed under plating conditions of 2.0 A and 10 minutes at a zinc plating bath temperature of 25°C.

### (4) Evaluation of brightness and appearance

After the above-described hull cell plating test, the brightness of a zinc coating formed on the surface of a cathode sheet was visually judged. The results are shown in Table 2. The term "entire brightness" as used in Table 2 means that a zinc coating has substantially a uniform mirror surface. The term "semi-brightness" means that a zinc coating has dull brightness. The term "coarse crystals" means crystals which are different in size and are therefore coarse.

### (5) Bend test at high current area

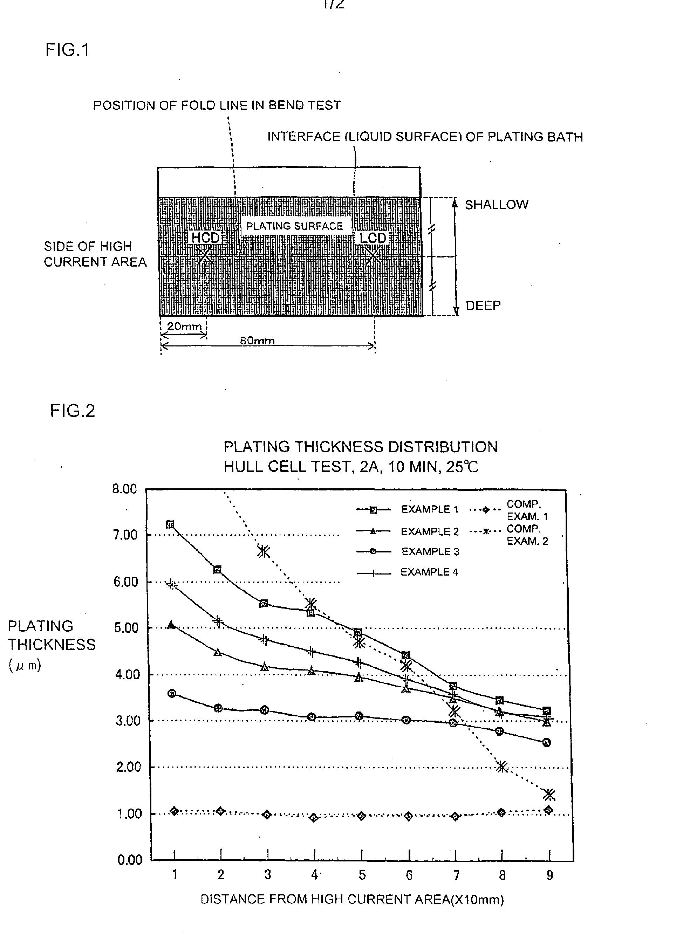

FIG. 1 is a schematic view showing the front surface (surface subjected to zinc plating which is so-called "plating surface") of a cathode sheet after the hull cell plating test. Referring to FIG. 1, the cathode sheet was bent so as to form a fold line extending from the end of a high current area to the end of a low current area at a position corresponding to just the center depth when the cathode sheet was placed in a plating tank. Described specifically, the cathode sheet was bent 180 degrees to bring the halved back surfaces (on the side opposite to the plating surface) of the cathode sheet in contact with each other and then the cathode sheet was unfolded until the bent plating surface became flat. Under such a state, whether peeling of the zinc coating occurred at the fold line in the vicinity of the end of the high current area (within a range of 20 mm from the end of the high current area) on the plating surface was judged. The results are shown in Table 2.

### (6) Measurement of thickness of zinc coating

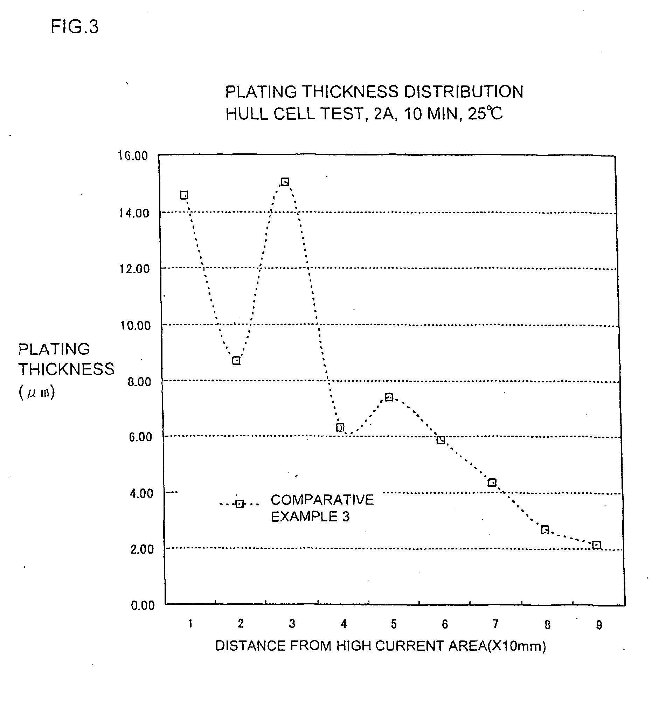

The thickness of the zinc coating was measured using a fluorescent X-ray coating thickness gauge (SFT-9200, product of SII). Referring to FIG. 1, the coating thickness was measured at nine positions in total, that is, 10 mm, 20 mm, 30 mm, 40 mm, 50 mm, 60 mm, 70 mm, 80 mm, and 90 mm toward the end of the low current area from the end of the high current area at a position corresponding to just the center depth (similar to the position where a fold line was made in the above-described bend test at high current area) when a cathode sheet was placed in a plating tank. The results of Examples 1 to 4, Comparative Example 1, and Comparative Example 2 are shown in the graph of FIG. 2. The results of Comparative Example 3 are shown in the graph of FIG. 3.

### (7) Evaluation of uniform electrodeposition

Uniform electrodeposition was evaluated based on the calculated results of a ratio (HCD/LCD) of the coating thickness (HCD) at a position 20 mm from the end of the high current area to the coating thickness (LCD) at a position 80 mm from the end of the high current area in the measurement of the thickness of the zinc coating. The results are shown in Table 2.

The results have revealed that in Examples 1 to 4, uniform electrodeposition is high and a thick zinc coating can be formed. In Comparative Example 1, on the other hand, a uniformly thin coating extends from a high current density position to a low current density position and thus, a zinc coating with uniform thickness is formed. In Comparative Example 2, a zinc coating becomes excessively thick at a high current density position, while the zinc coating becomes thin at a low current density position. This means that when Additive E was contained as in Comparative Example 2, the resulting zinc coating becomes excessively thick at some positions on the surface of the object under the following conditions: zinc ion concentration of 12 g/L and temperature of zinc plating bath of 25°C.

In addition, it has been elucidated from the results of Examples 1 to 3 that the formation speed of a zinc coating can be increased or decreased by increasing or decreasing the structural units (a)•(b) percentage of the water soluble copolymer while keeping the concentration of the water soluble copolymer constant.

It has been elucidated that using the zinc plating bath of Example 3 enables the formation of a thick zinc coating with uniform thickness. On the other hand, it has been elucidated that a zinc coating obtained using the zinc plating bath of Comparative Example 1 has a uniform thickness but is thin (the thickness of the zinc coating of Comparative Example 1 was about one third of the thickness of the zinc coating of Example 3).

Comparative Example 3 does not contain any of Additives A to E. As shown in FIG. 3, it has been confirmed that when a zinc plating bath does not contain an additive having an action of suppressing deposition of zinc, the zinc coating has variations in thickness, depending on the position on the surface of the object. In Comparative Example 3, the coating becomes excessively thick at some positions irrespective of the intensity of the current density (a zinc coating with an uneven surface was formed).

## Claims

1. An alkaline non-cyanide zinc plating bath comprising a zinc plating bath additive, zinc ions, and hydroxide ions, the zinc plating bath additive comprising a water soluble copolymer having structural units (a) each represented by the following formula (1) and structural units (b) each represented by the following formula (2): 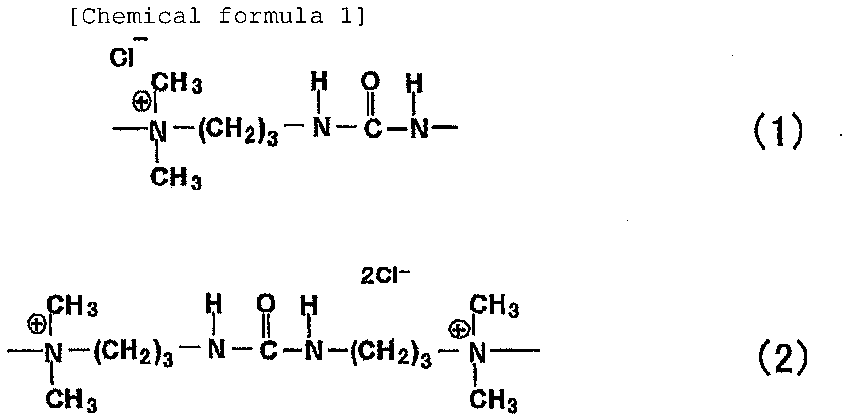 wherein the structural units (a) and the structural units (b) are contained in the water soluble copolymer so that a percentage of the mass of the structural units (a) relative to the sum of the mass of the structural units (a) and the mass of the structural units (b) is from 10 to 60%;
wherein in the water soluble copolymer, the structural units (a), the structural units (b), or the structural unit (a) and the structural unit (b) have been linked to each other via a linking group represented by the following formula (3) and/or the following formula (4): 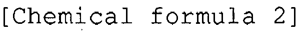 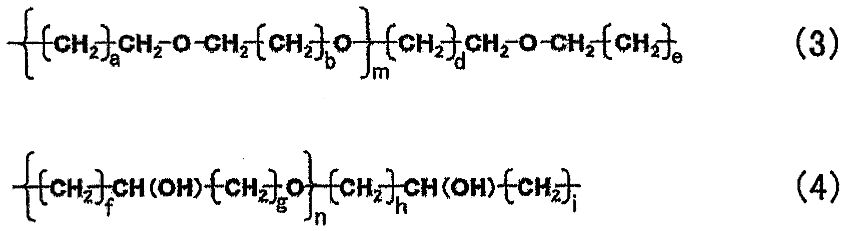 (in the formula (3), a stands for an integer from 1 to 5, b stands for an integer from 1 to 5, d stands for an integer from 1 to 5, e stands for an integer from 1 to 5, and m stands for an integer from 0 to 5, while in the formula (4), f stands for an integer from 1 to 5, g stands for an integer from 1 to 5, h stands for an integer from 1 to 5, i stands for an integer from 1 to 5, and n stands for an integer from 0 to 5).

2. The alkaline non-cyanide zinc plating bath according to Claim 1, wherein the water soluble copolymer is contained in an amount of from 0.1 to 50 g/L.

3. The alkaline non-cyanide zinc plating bath according to Claim 1 or claim 2, comprising N-benzylpyrimidium-3-carbonate.

4. The alkaline non-cyanide zinc plating bath according to any one of Claims 1 to 3, comprising a bisulfite adduct obtained by adding a bisulfite to the aldehyde group of an aromatic aldehyde compound represented by the following formula (5): 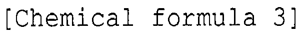 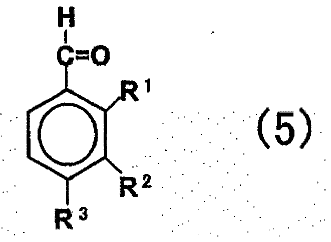 (in the formula (5), R¹, R², R³ each represents -H, -OH, or -OCH₃ and R¹ to R³ may be the same or different).

5. The alkaline non-cyanide zinc plating bath according to Claim 4, wherein the aromatic aldehyde compound is at least one compound selected from the group consisting of 4-methoxybenzaldehyde, 4-hydroxy-3-methoxybenzaldehyde, 3,4-dimethoxybenzaldehyde, 3,4-methylenedioxybenzaldehyde, 2-hydroxybenzaldehyde, and 4-hydroxybenzaldehyde.

6. The alkaline non-cyanide zinc plating bath according to Claim 4 or 5, wherein the bisulfite adduct is contained in an amount of from 0.005 to 1.0 g/L.

7. The alkaline non-cyanide zinc plating bath according to any one of Claims 1 to 6, wherein the zinc ions are contained in an amount of from 5 to 25 g/L.

8. The alkaline non-cyanide zinc plating bath according to any one of Claims 1 to 7, comprising at least one compound selected from the group consisting of silicon compounds, sodium ethylenediaminetetraacetate, and trisodium hydroxyethylenediaminetriacetate.

9. The alkaline non-cyanide zinc plating bath according to any one of Claims 1 to 8, comprising a heterocyclic compound represented by the following formula (6) and/or a derivative of the heterocyclic compound: 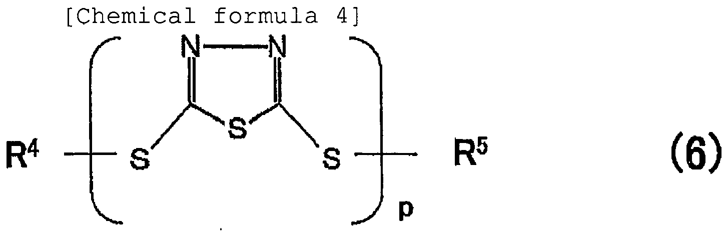 (in the formula (6), p stands for an integer from 1 to 3 and R⁴ and R⁵ may be the same or different and each represents -H, -CH₂COOH, -CH₂CH₂OH, or -CH₂CH(OH)CH₂Cl).

## Patentansprüche

1. Cyanidfreies alkalisches Zinkplattierungsbad, das einen Zinkplattierungsbadezusatz, Zinkionen und Hydroxidionen umfasst, wobei der Zinkplattierungsbadezusatz ein wasserlösliches Copolymer mit Struktureinheiten (a), für die jeweils die folgende Formel (1) steht, und Struktureinheiten (b), für die jeweils die folgende Formel (2) steht, umfasst: 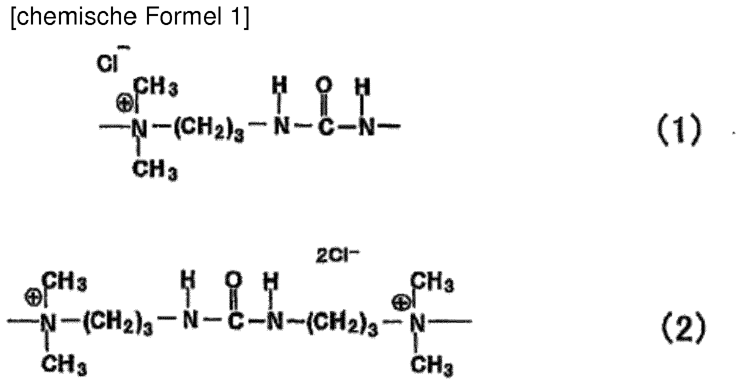 worin die Struktureinheiten (a) und die Struktureinheiten (b) in dem wasserlöslichen Copolymer in solcher Weise enthalten sind, dass der Prozentsatz der Masse der Struktureinheiten (a) im Verhältnis zur Summe der Masse der Struktureinheiten (a) und der Masse der Struktureinheiten (b) 10 bis 60 % beträgt;
worin in dem wasserlöslichen Copolymer die Struktureinheiten (a), die Struktureinheiten (b) oder die Struktureinheiten (a) und die Struktureinheiten (b) miteinander über eine durch die nachstehende Formel (3) und/oder die nachstehende Formel (4) dargestellte Linkergruppe verbunden wurden: 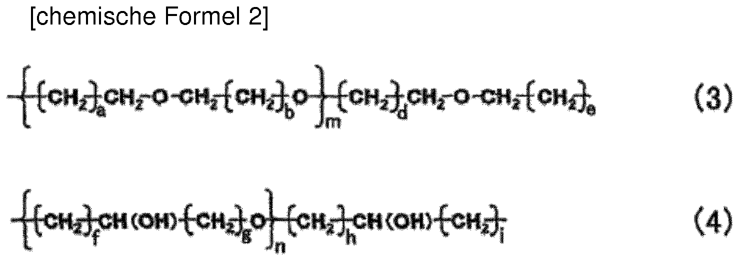 (in Formel (3) steht a für eine ganze Zahl von 1 bis 5, b für eine ganze Zahl von 1 bis 5, d für eine ganze Zahl von 1 bis 5, e für eine ganze Zahl von 1 bis 5 und m für eine ganze Zahl von 0 bis 5, während in Formel (4) f für eine ganze Zahl von 1 bis 5, g für eine ganze Zahl von 1 bis 5, h für eine ganze Zahl von 1 bis 5, i für eine ganze Zahl von 1 bis 5 und n für eine ganze Zahl von 0 bis 5 steht).

2. Cyanidfreies alkalisches Zinkplattierungsbad nach Anspruch 1, worin das wasserlösliche Copolymer in einer Menge von 0,1 bis 50 g/l enthalten ist.

3. Cyanidfreies alkalisches Zinkplattierungsbad nach Anspruch 1 oder Anspruch 2, das N-Benzylpyrimidium-3-carbonat umfasst.

4. Cyanidfreies alkalisches Zinkplattierungsbad nach einem der Ansprüche 1 bis 3, das ein durch Addition eines Bisulfits an die Aldehydgruppe einer durch die nachstehende Formel (5) dargestellten aromatischen Aldehydverbindung erhaltenes Bisulfitaddukt umfasst: 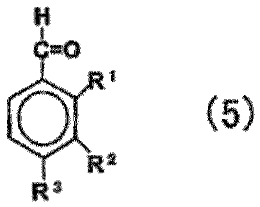 (in Formel (5) stehen R¹, R², R³ jeweils für -H, -OH oder -OCH₃, und R¹ bis R³ können gleich oder unterschiedlich sein).

5. Cyanidfreies alkalisches Zinkplattierungsbad nach Anspruch 4, worin die aromatische Aldehydverbindung zumindest eine aus der aus 4-Methoxybenzaldehyd, 4-Hydroxy-3-methoxybenzaldehyd, 3,4-Dimethoxybenzaldehyd, 3,4-Methylendioxy-benzaldehyd, 2-Hydroxybenzaldehyd und 4-Hydroxybenzaldehyd bestehenden Gruppe ausgewählte Verbindung ist.

6. Cyanidfreies alkalisches Zinkplattierungsbad nach Anspruch 4 oder 5, worin das Bisulfitaddukt in einer Menge von 0,005 bis 1,0 g/l enthalten ist.

7. Cyanidfreies alkalisches Zinkplattierungsbad nach einem der Ansprüche 1 bis 6, worin die Zinkionen in einer Menge von 5 bis 25 g/l enthalten sind.

8. Cyanidfreies alkalisches Zinkplattierungsbad nach einem der Ansprüche 1 bis 7, das zumindest eine aus der aus Siliciumverbindungen, Natriumethylendiamintetraacetat und Trinatriumhydroxyethylendiamintriacetat bestehenden Gruppe ausgewählte Verbindung umfasst.

9. Cyanidfreies alkalisches Zinkplattierungsbad nach einem der Ansprüche 1 bis 8, das eine durch die nachstehende Formel (6) dargestellte heterozyklische Verbindung und/oder ein Derivat der heterozyklischen Verbindung umfasst: 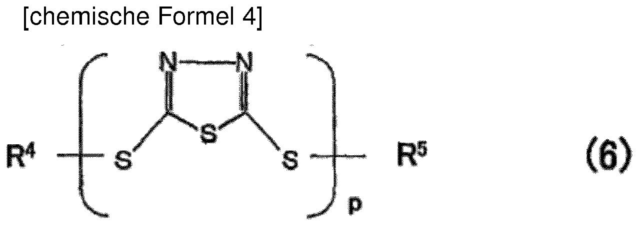 (in Formel (6) steht p für eine ganze Zahl von 1 bis 3, und R⁴ und R⁵ können gleich oder unterschiedlich sein und stehen jeweils für -H, -CH₂COOH, -CH₂CH₂OH oder -CH₂CH(OH)CH₂Cl).

## Revendications

1. Bain de zingage alcalin sans cyanure comprenant un additif de bain de zingage, des ions zinc et des ions hydroxyde, l'additif de bain de zingage comprenant un copolymère soluble dans l'eau comportant des unités structurales (a) chacune représentée par la formule suivante (1) et des unités structurales (b) chacune représentée par la formule suivante (2) : 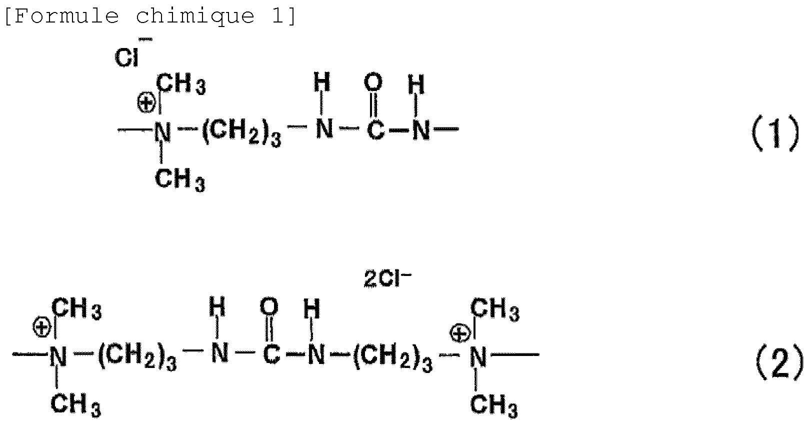 dans lequel les unités structurales (a) et les unités structurales (b) sont contenues dans le copolymère soluble dans l'eau de manière à ce qu'un pourcentage de la masse des unités structurales (a) par rapport à la somme de la masse des unités structurales (a) et de la masse des unités structurales (b) soit de 10 à 60 % ;
dans lequel dans le copolymère soluble dans l'eau, les unités structurales (a), les unités structurales (b), ou l'unité structurale (a) et l'unité structurale (b) ont été liées les unes aux autres via un groupe de liaison représenté par la formule suivante (3) et/ou la formule suivante (4) : 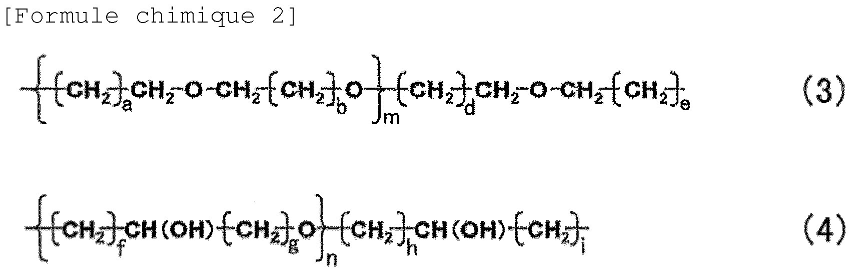 (dans la formule (3), a désigne un nombre entier de 1 à 5, b désigne un nombre entier de 1 à 5, d désigne un nombre entier de 1 à 5, e désigne un nombre entier de 1 à 5, et m désigne un nombre entier de 0 à 5, tandis que dans la formule (4), f désigne un nombre entier de 1 à 5, g désigne un nombre entier de 1 à 5, h désigne un nombre entier de 1 à 5, i désigne un nombre entier de 1 à 5, et n désigne un nombre entier de 0 à 5).

2. Bain de zingage alcalin sans cyanure selon la Revendication 1, dans lequel le copolymère soluble dans l'eau est contenu en une quantité de 0,1 à 50 g/l.

3. Bain de zingage alcalin sans cyanure selon la Revendication 1 ou la revendication 2, comprenant du N-benzylpyrimidium-3-carbonate.

4. Bain de zingage alcalin sans cyanure selon l'une quelconque des Revendications 1 à 3, comprenant un adduit de bisulfite obtenu en ajoutant un bisulfite au groupe aldéhyde d'un composé aldéhyde aromatique représenté par la formule suivante (5) : 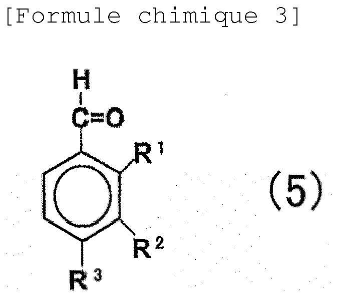 (dans la formule (5), R¹, R², R³ représentent chacun -H, -OH ou -OCH₃ et R¹ à R³ peuvent être identiques ou différents).

5. Bain de zingage alcalin sans cyanure selon la Revendication 4, dans lequel le composé aldéhyde aromatique est au moins un composé choisi dans le groupe constitué du 4-méthoxybenzaldéhyde, du 4-hydroxy-3-méthoxybenzaldéhyde, du 3,4-diméthoxybenzaldéhyde, du 3,4-méthylènedioxy-benzaldéhyde, du 2-hydroxybenzaldéhyde et du 4-hydroxybenzaldéhyde.

6. Bain de zingage alcalin sans cyanure selon la Revendication 4 ou 5, dans lequel l'adduit de bisulfite est contenu en une quantité de 0,005 à 1,0 g/l.

7. Bain de zingage alcalin sans cyanure selon l'une quelconque des Revendications 1 à 6, dans lequel les ions zinc sont contenus en une quantité de 5 à 25 g/l.

8. Bain de zingage alcalin sans cyanure selon l'une quelconque des Revendications 1 à 7, comprenant au moins un composé choisi dans le groupe constitué des composés à base de silicium, de l'éthylènediaminetétraacétate de sodium et de l'hydroxyéthylènediaminetriacétate de trisodium.

9. Bain de zingage alcalin sans cyanure selon l'une quelconque des Revendications 1 à 8, comprenant un composé hétérocyclique représenté par la formule suivante (6) et/ou un dérivé du composé hétérocyclique : 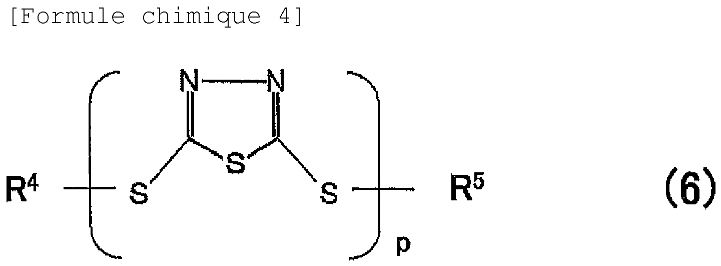 (dans la formule (6), p désigne un nombre entier de 1 à 3 et R⁴ et R⁵ peuvent être identiques ou différents et représentent chacun -H, -CH₂COOH, -CH₂CH₂OH ou -CH₂CH(OH)CH₂Cl).
